# EUROPÄISCHE PATENTSCHRIFT

(11) **EP 1 663 572 B1**
(45) Veröffentlichungstag und Bekanntmachung des Hinweises auf die Patenterteilung: **10.01.2007**
(21) Anmeldenummer: 04741057.6
(22) Anmeldetag: 15.07.2004
(51) Int. Cl.: B23Q 11/10, B23Q 1/00, B23Q 3/155

(54) **VORRICHTUNG UND VERFAHREN ZUR AEROSOLSCHMIERUNG UNTER VERWENDUNG EINES BYPASS-VENTILS**
DEVICE AND METHOD FOR AEROSOL LUBRICATION USING A BYPASS VALVE
DISPOSITIF ET PROCEDE DE LUBRIFICATION PAR AEROSOL PAR UTILISATION D'UNE SOUPAPE DE DERIVATION

(30) Priorität: 26.09.2003 DE 10345130
(43) Veröffentlichungstag der Anmeldung: 07.06.2006
(73) Patentinhaber: Willy Vogel AG, 12277 Berlin (DE)
(72) Erfinder: SPIESS, Götz, 14089 Berlin (DE); STOCKHAMMER, Raimund, 12205 Berlin (DE)
(74) Vertreter: Grünecker, Kinkeldey, Stockmair & Schwanhäusser Anwaltssozietät
(86) Internationale Anmeldenummer: PCT/EP2004/007883
(87) Internationale Veröffentlichungsnummer: WO 2005/039818

(56) Entgegenhaltungen:
- EP-A- 0 458 632
- EP-A- 0 669 187
- DE-A- 3 429 965
- DE-A- 19 654 321

## Beschreibung

Die Erfindung betrifft eine Aerosolvorrichtung, insbesondere zum Schmieren und/oder Kühlen von Aerosolverbrauchern, wie Werkzeugen und/oder Werkstücken, mit einem Aerosolerzeuger, durch den im Betrieb ein Aerosol aus einer Flüssigkeit und einem Trägergas erzeugbar ist, und mit einem im Strömungsweg des Aerosols zum Aerosolverbraucher angeordneten Fluidschaltorgan, durch das in einer Betriebsstellung der Aerosolerzeuger mit dem Aerosolverbraucher aerosolleitend verbindbar ist.

Die Erfindung betrifft ferner ein Verfahren insbesondere zum Schmieren und/oder Kühlen von Aerosolverbrauchern wie Werkzeugen und/oder Werkstücken, bei dem ein Aerosol aus einer Flüssigkeit und einem Trägergas erzeugt und zu einem Fluidschaltorgan und von dort zu dem Aerosolverbraucher geleitet wird.

Eine derartige Vorrichtung und ein derartiges Verfahren sind beispielsweise aus der DE 101 04 012 A1 bekannt. Bei dieser Vorrichtung werden Luft als Trägergas und Öl als Flüssigkeit einer Injektorvorrichtung zugeführt. Die Injektorvorrichtung saugt Öl an und vermischt dieses mit der unter Druck zugeführten Luft. Der so erhaltene Aerosolstrahl wird in einen Druckbehälter abgegeben und über einen Aerosolabgang aus dem Druckbehälter geführt. Zwischen dem Aerosolabgang und einem Werkzeug als Aerosolverbraucher ist ein von einer externen Steuerung gesteuertes Verschlussmittel, vorzugsweise ein druckluftgesteuerter Kugelhahn, vorgesehen. Dieser kann über eine Steuerung mit kurzen Ansprechzeiten geschlossen und geöffnet werden, so dass dadurch die Zufuhr von Aerosol zum Werkzeug abrupt aktiviert und deaktiviert werden kann. Weitere Vorrichtungen, die ähnlich der Vorrichtung der DE 101 04 012 A1 aufgebaut sind, sind aus der EP 0 458 632 A1, der DE 197 21 650 A1 und der DE 196 54 321 A1 bekannt. Eine weitere Vorrichtung zur Aerosolerzeugung ist aus der EP 1 106 902 bekannt.

Die Schmierung und/oder Kühlung eines Werkzeuges und/oder eines Werkstückes, insbesondere bei Werkzeugmaschinen, mittels eines mit diesen Vorrichtungen erzeugtes Aerosol hat gegenüber einer Flüssigschmierung, wie sie beispielsweise Gegenstand der DE-A-34 29 965 ist, zum einen den Vorteil, dass bei gleichbleibender Kühl-und Schmierwirkung weniger Flüssigkeit verbraucht wird, und zum anderen den Vorteil, dass aufgrund der gasförmigen Konsistenz des Aerosols dieses auch durch rotierende Kanäle bzw. Schmierstoffleitungen in Werkzeugen direkt an die Schmierstelle geführt werden kann, ohne dass sich die Flüssigkeit an den Kanalwänden niederschlägt. An der Schmierstelle, üblicherweise ein Bereich um den Ort der Spanabhebung herum findet der Aerosolverbrauchsvorgang statt.

Schwierigkeiten treten bei den bekannten Aerosolerzeugern jedoch dann auf, wenn sie mit wechselnden Aerosolverbrauchern betrieben werden, beispielsweise zur Schmierung von Werkzeugen in Werkzeugmaschinen mit automatischem Werkzeugwechsel. Bei derartigen Werkzeugmaschinen ist ein Magazin mit einer Mehrzahl von unterschiedlichen Werkzeugen vorgesehen, auf die die Maschine je nach dem erforderlichen Bearbeitungsprozess programmgesteuert automatisch zugreifen kann, so dass nacheinander unterschiedliche Werkzeuge mit dem Aerosol vom Aerosolerzeuger versorgt werden müssen. Während des Werkzeugwechsels ist der Schmiervorgang am Werkzeug unterbrochen.

Bei den bekannten Aerosolerzeugern führt ein solcher Werkzeugwechsel zu einer Agglomeration und zu einer unerwünschten Vergrößerung der Tröpfchen im Aerosol.

Daher liegt der vorliegenden Erfindung die Aufgabe zugrunde, die bekannten Aerosolvorrichtungen und die bekannten Verfahren mit den jeweils eingangs genannten Merkmalen so zu verbessern, dass auch nach einem Werkzeugwechsel die Schmierqualität verbessert wird.

Diese Aufgabe wird für die eingangs genannte Aerosolvorrichtung erfindungsgemäß dadurch gelöst, dass das Fluidschaltorgan eine Abzweigung aufweist und von der Betriebsstellung in eine Bypass-Stellung überführbar ausgestaltet ist, wobei in der Bypass-Stellung der Aerosolerzeuger mit der Abzweigung aerosolleitend verbunden ist.

Für das eingangs genannte Verfahren wird diese Aufgabe erfindungsgemäß dadurch gelöst, dass bei einem Wechsel des Aerosolverbrauchers das Fluidschaltorgan in eine Bypass-Stellung überführt wird, in der das Aerosol wenigstens teilweise am Aerosolverbraucher vorbei durch das Fluidschaltorgan geleitet wird.

Diese Maßnahme ist einfach und hat zur Folge, dass die Aerosolqualität nach einem Werkzeugwechsel verbessert wird. Dies scheint darauf zurückzuführen zu sein, dass in der Bypass-Stellung des Fluidschaltorgans im Gegensatz zu den bekannten Aerosolvorrichtungen das Aerosol am Strömen gehalten wird, so dass die Tröpfchenagglomeration während des Werkzeugwechsels deutlich reduziert wird.

Dabei kann es von Vorteil sein, wenn die Bypass-Stellung synchronisiert mit einem Werkzeugwechsel der Werkzeugmaschine eingenommen wird. In der Bypass-Stellung wird vorzugsweise das Aerosol durch die Abzweigung des Fluidschaltorgans am Aerosolverbraucher vorbei geleitet. Unter einem Fiuidschaitorgan ist dabei ein Drosselorgan oder Ähnliches zu verstehen, wie beispielsweise ein Hahn, ein Schieber oder ein Ventil, mit dem zwischen dem Strömungsweg zum Aerosolverbraucher und der Abzweigung umgeschaltet werden kann.

Vorzugsweise ist das Fluidschaltorgan möglichst nahe am Aerosolverbraucher bzw. beabstandet vom Aerosolerzeuger angeordnet, so dass bei einem Umschalten von der Bypass-Stellung in die Betriebsstellung lediglich ein möglichst geringes Volumen zwischen dem Fluidschaltorgan und dem Aerosolverbraucher mit dem Aerosol aufgefüllt werden muss. Durch diese Maßnahme verkürzen sich die Reaktionszeiten, innerhalb derer nach einem Wechsel der Aerosolverbraucher ein Aerosol in gleichbleibender oder neu angepasster Qualität am neu eingewechselten Aerosolverbraucher zur Verfügung steht, da die Aerosolerzeugung nicht mehr während des Werkzeugwechsels unterbrochen werden muss.

Derartige schnelle Reaktionszeiten können gemäß einer vorteilhaften Ausgestaltung der Aerosolvorrichtung insbesondere auch erreicht werden, wenn die Länge des Strömungsweges in Strömungsrichtung des Aerosols vor dem Fluidschaltorgan größer ist, als die Länge des Strömungsweges hinter dem Drosselorgan.

Um bei den im Stand der Technik üblichen Leitungsdurchmessern von Aerosolleitungen Reaktionszeiten zu erzielen, die den Zeiten für den Werkzeugwechsel und das Zustellen des neuen Werkzeuges in das Werkstück entsprechen, kann das Verhältnis der Länge der Strömungswege vor und hinter dem Drosselorgan wenigstens 2:1 betragen. Bei größeren Leitungsdurchmessern, beispielsweise bei Aerosolleitungen mit Durchmessern von wenigstens 5 mm oder gar wenigstens 10 mm kann das Verhältnis der Strömungswege vor und hinter dem Fluidschaltorgan auch wenigstens 5:1 betragen, um auch hier schnelle Reaktionszeiten zu erreichen. Diese Bemessungsrichtlinien führen nach dem Umschalten in die Betriebsstellung zu einer schnellen Befüllung des in der Bypass-Stellung durch das Fluidschaltorgan abgeteilten Strömungsweges im Bereich zwischen dem Fluidschaltorgan und dem Aerosolverbraucher.

Eine andere, ebenfalls vorteilhafte Maßnahme zur Verringerung der Reaktionszeiten kann darin bestehen, dass der Strömungsweg des Aerosols in Strömungsrichtung des Aerosols hinter dem Fluidschaltorgan höchstens etwa zwei Meter beträgt. Legt man den üblichen Druck zugrunde, mit dem das Aerosol durch eine Aerosolleitung geleitet wird, beispielsweise Drücke um die 6 bar, so wird bei den mit diesem Druck erzielbaren Strömungsgeschwindigkeiten des Aerosols bei einem Abstand des Fluidschaltorganes vom Aerosolverbraucher von etwa zwei Metern ebenfalls eine Reaktionszeit erreicht, die etwa der Dauer eines sehr schnellen Werkzeugwechsels entspricht. Ein solcher schneller Werkzeugwechsel kann unter 1 Sekunde dauern.

Insbesondere kann der Strömungsweg zwischen dem Fluidschaltorgan und dem Aerosolverbraucher hinsichtlich seines Durchmessers und/oder seiner Länge so bemessen sein, dass das nach dem Umschalten in der Bypass-Stellung am Fluidschaltorgan anliegende Aerosol innerhalb einer Füll- bzw. Reaktionszeit von weniger als 0,5 Sekunden, vorzugsweise innerhalb von weniger als 0,2 Sekunden, am Aerosolverbraucher anliegt. Diese Zeiten entsprechen in etwa den Zeiten, innerhalb denen bei Werkzeugmaschinen neu eingewechselte Werkzeuge mit dem Bearbeiten des Werkstückes beginnen und geschmiert bzw. gekühlt werden müssen.

Kurze Reaktionszeiten lassen sich gemäß einer vorteilhaften Weiterbildung auch dann erreichen, wenn das Fluidschaltorgan an oder im Bereich einer Werkzeugmaschine angeordnet ist. Bei dieser Ausgestaltung kann das Volumen des beim Umschalten von der Bypass- in die Betriebsstellung zu füllenden Volumens besonders einfach klein gehalten werden. Diese Ausgestaltung hat den weiteren Vorteil, dass das Fluidschaltorgan in die Werkzeugmaschine integrierbar und an die Steuereinrichtung der Werkzeugmaschine ohne größeren Aufwand anschließbar ist. Das Fluidschaltorgan kann auch in einer vom Aerosolerzeuger zum Aerosolverbraucher führenden, vorzugsweise flexiblen Leitung angeordnet sein.

Der Strömungsquerschnitt der Aerosolleitung vor dem Fluidschaltorgan kann in einer vorteilhaften Weiterbildung mindestens etwa doppelt so groß sein wie der Strömungsquerschnitt hinter dem Fluidschaltorgan. Insbesondere bei Aerosolleitungen zum Aerosolverbraucher mit kleinem Durchmesser sollte der Strömungsquerschnitt der Aerosolleitung vor dem Fluidschaltorgan mindestens etwa viermal, bevorzugt jedoch mindestens etwa 16-mal so groß sein wie der Strömungsquerschnitt hinter dem Fluidschaltorgan. Bei einem 16-mal so groß bemessenen Strömungsquerschnitt wirkt der Bereich vor dem Fluidschaltorgan als Aerosolkammer.

Um zumindest in dem Bereich zwischen dem Aerosolerzeuger und dem Fluidschaltorgan sowohl in der Bypass-Stellung als auch in der Betriebsstellung ein Aerosol von hoher Schmierqualität, d. h. konstant geringer Tröpfchengröße und gleichbleibender Fettigkeit, zu erhalten, kann gemäß einer weiteren vorteilhaften Ausgestaltung der Strömungsweg des Aerosols in dem in Strömungsrichtung des Aerosols vor dem Fluidschaltorgan liegenden Bereich einen größeren Strömungsquerschnitt aufweisen als hinter dem Fluidschaltorgan. Durch diese Maßnahme ist in der Bypass-Stellung eine stets schnelle Befüllung des Strömungsweges bis zum Fluidschaltorgan bei niedrigen Strömungsgeschwindigkeiten im Bereich vor dem Fluidschaltorgan möglich. Ferner ist bei dieser Ausgestaltung eine schnelle Reaktion auf eine Änderung des Strömungswiderstandes nach einem Werkzeugwechsel durch ein neues eingewechseltes Werkzeug möglich: Da unterschiedliche Werkzeuge aufgrund ihrer unterschiedlichen Zerspanungseigenschaften mit unterschiedlichen Zusammensetzungen und Fettigkeitsstufen bzw. Flüssigkeitsanteilen des Aerosols versorgt werden müssen, ist es nach einem Werkzeugwechsel bei dieser Ausgestaltung leichter möglich, die gewünschte Aerosolzusammensetzung direkt am Aerosolverbraucher bereitzustellen.

Ein weiterer wesentlicher Vorteil gegenüber den bekannten Aerosolerzeugern kann bei einer weiteren Ausgestaltung erreicht werden, die an sich unabhängig von den übrigen Ausgestaltungen ist. Gemäß dieser Ausgestaltung kann das Fluidschaltorgan ein in der Bypass-Stellung vom Aerosol durchströmtes Widerstandsorgan umfassen, dessen Strömungswiderstand an den Strömungswiderstand des Aerosolverbrauchers angepasst ist. Diese Maßnahme hat den Vorteil, dass der Aerosolerzeuger bereits vor dem Zuschalten des nachfolgenden Aerosolverbrauchers, beispielsweise nach einem Werkzeugwechsel, bereits gegen einen Strömungswiderstand arbeitet, der diesem Aerosolverbraucher entspricht. Beim Umschalten von der Bypass-Stellung in die Betriebsstellung kommt es nicht mehr zu einer sprunghaften Änderung des Strömungswiderstandes, gegen den der Aerosolerzeuger arbeiten muss.

Um bei einer Vielzahl von verschiedenen Aerosolverbrauchern stets die benötigte Aerosolqualität direkt am Aerosolverbraucher in kürzester Zeit bereitstellen zu können, kann das Widerstandsorgan auch an die unterschiedlichen Strömungswiderstände unterschiedlicher Aerosolverbraucher veränderlich anpassbar sein.

Dies kann beispielsweise dadurch erfolgen, dass das Widerstandsorgan mehrere Blendenöffnungen umfasst; die einzeln oder in Kombination schaltbar vom Aerosol durchströmbar ausgestaltet sind. Je nach Größe und/oder Anzahl der durchströmten Blendenöffnungen ändert sich der Strömungswiderstand des Widerstandsorgans, so dass er an den jeweiligen Strömungswiderstand des Aerosolverbrauchers angepasst werden kann.

Zusätzlich oder alternativ kann das Widerstandsorgan auch ein Element umfassen, das einen veränderlichen Strömungsquerschnitt aufweist, wie beispielsweise eine verstellbare Blende oder ein Proportionalventil. In diesem Fall wird durch eine Veränderung des Strömungsquerschnitts der gewünschte Strömungswiderstand eingestellt.

Schließlich kann die Aerosolvorrichtung auch eine vorzugsweise elektronische Steuereinrichtung umfassen, die mit dem Fluidschaltorgan und einer Werkzeugmaschine signalübertragend verbindbar ausgestaltet ist. Insbesondere kann eine solche Steuereinrichtung ein Synchronisationsmodul aufweisen, welches die Überführung des Fluidschaltorgans von der Betriebsstellung in die Bypass-Stellung und zurück mit jeweils den Werkzeugwechseln synchronisiert. Über das Synchronisationsmodul, beispielsweise ein standardisiertes Busssystem zur Datenübertragung, kann die Aerosolerzeugung darüber hinaus auch andere Betriebszuständen der Werkzeugmaschine, wie beispielsweise Drehzahlveränderungen und Veränderungen der Vorschubgeschwindigkeiten, synchronisieren.

Von der Erfindung umfasst ist auch eine Werkzeugmaschine, die eine Aerosolvorrichtung oder ein Fluidschaltorgan in einer der obigen Ausgestaltungen umfasst.

Ferner kann erfindungsgemäß ein Nachrüstsatz für bestehende Aerosolvorrichtungen und/oder Werkzeugmaschinen, wie sie beispielsweise aus dem Stand der Technik bekannt sind, vorgesehen sein. Ein derartiger Nachrüstsatz weist ein Fluidschaltorgan auf, das vom Aerosol durchströmbar in einer Aerosolleitung von der Aerosolvorrichtung zu dem Aerosolverbraucher anordenbar und von einer Betriebsstellung, in dem der Aerosolerzeuger mit dem Aerosolverbraucher aerosolleitend verbindbar ist, in die oben beschriebene Bypass-Stellung überführbar ausgestaltet ist.

Im Folgenden wird die Erfindung anhand von Ausführungsbeispielen mit Bezug auf die Figuren genauer erläutert. Dabei werden bei den verschiedenen Ausführungsbeispielen für Elemente, die hinsichtlich Funktion und/oder Aufbau gleich oder ähnlich sind, die gleichen Bezugszeichen verwendet. Die bei den unterschiedlichen Ausführungsbeispielen unterschiedlichen Merkmale können, wie oben beschrieben ist, beliebig miteinander kombiniert werden, wobei einzelne Merkmale auch weggelassen werden können, sofern die daraus resultierende Ausführung wenigstens die Merkmale eines der unabhängigen Ansprüche aufweist.

Es zeigen:
- Fig. 1: eine schematische Darstellung einer erfindungsgemäßen Aerosolvorrichtung zusammen mit einer Werkzeugmaschine;
- Fig. 2: eine erste Abwandlung des bei der Aerosolvorrichtung der Fig. 1 verwendeten Fluidschaltorgans;
- Fig. 3: eine zweite Abwandlung des bei der Aerosolvorrichtung der Fig. 1 verwendeten Fluidschaltorgans;

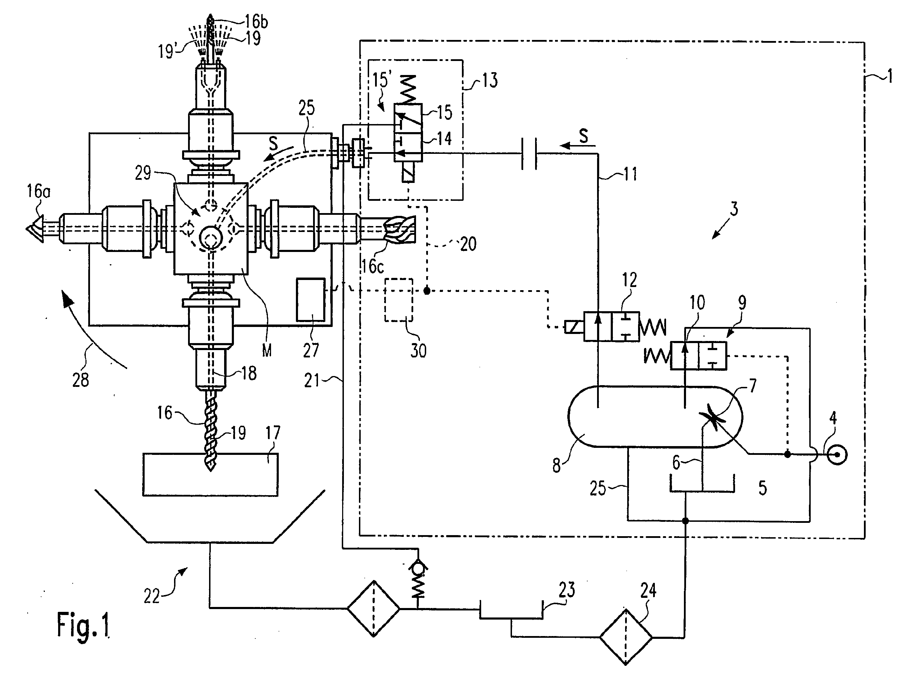

In Fig. 1 sind schematisch eine Aerosolvorrichtung 1 und eine von der Aerosolvorrichtung 1 geschmierte Werkzeugmaschine 2 schematisch dargestellt.

Die Aerosolvorrichtung 1 weist einen Aerosolerzeuger 3 auf, in dem aus einem beispielsweise über eine Druckluftleitung 4 zugeführten Trägergas und einer aus einem Vorratsbehälter 5 über eine Leitung 6 zugeführte Flüssigkeit wie Öl ein Aerosol erzeugt wird.

Das Aerosol kann mittels eines Injektors 7 erzeugt werden, der eine von der Druckluft durchströmte Venturi-Düse aufweist, welche die Flüssigkeit über die Leitung 6 selbsttätig ansaugt und zerstäubt.

Das vom Injektor 7 erzeugte Aerosol kann in Form eines Aerosolstrahles an eine Druckkammer 8 abgegeben werden. Über ein Druckregelsystem 9 kann der Druck in der Druckammer 8 beispielsweise in Abhängigkeit von dem Versorgungsdruck der Druckluft über ein Steuerventil 10 konstant so eingestellt werden, dass der Injektor 7 stets im Bereich seines optimalen Arbeitspunktes betrieben werden kann. In der Druckkammer 8 können, in der Fig. 1 der Einfachheit halber nicht dargestellte, Filtereinrichtungen vorgesehen sein, die Aerosoltröpfchen oberhalb einer bestimmten Größe, wie beispielsweise einem Durchmesser von 5 µm, herausfiltern:

Aus der Druckkammer 8 wird das Aerosol über einen Strömungsweg 11, beispielsweise in Form einer Aerosolleitung, abgeleitet. Die Aerosolleitung 11 ist durch ein Absperrventil 12, beispielsweise in Form eines Kugelhahnes, absperrbar.

Die Aerosolvorrichtung 1 weist ferner ein im Strömungsweg des Aerosols angeordnetes Fluidschaltorgan 13, beispielsweise in Form eines Mehrwege-Ventils, eines Schiebers, einer Drossel oder eines Hahnes auf. Das Fluidschaltorgan 13 wird von dem vom Aerosolerzeuger 3 erzeugten Aerosol durchströmt und kann wenigstens zwei Schaltstellungen 14, 15 einnehmen. Das Fluidschaltorgan 13 umfasst ferner eine Abzweigung 15' vom Strömungsweg 11, durch die das Aerosol abgeleitet werden kann.

In der einen Schaltstellung, der Betriebsstellung 14, ist das vom Aerosolerzeuger 3 erzeugte Aerosol zu einem Aerosolverbraucher 16 geleitet. Wie aus der Fig. 1 hervorgeht, in der die Verwendung der Aerosolvorrichtung 1 zusammen mit einer Werkzeugmaschine 2 lediglich beispielhaft dargestellt ist, kann ein solcher Aerosolverbraucher ein Werkzeug 16 oder eine Werkstück 17 sein. Das Werkzeug 16, beispielsweise ein Bohrer, ein Fräser oder ein Drehstahl, kann bei einer Innenschmierung mit innenliegenden Aerosolkanälen 18 versehen sein, die sich mit dem Werkzeug 16 bewegen, insbesondere rotieren. Die Aerosolkanäle 18 enden in Aerosolöffnungen 19. Die Aerosolöffnungen 19 sind vorzugsweise in dem Bereich angeordnet, in dem bei dem Werkzeug 16 die Spanabhebung stattfindet, beispielsweise in der Nähe von Schneiden. Durch die Aerosolöffnungen 19 tritt das Aerosol aus und führt somit direkt am Ort der Spanabhebung zu einer Schmierung und/oder Kühlung.

Die Aerosolöffnungen 19 können bei Werkzeugen mit Außenschmierung auch außerhalb des Werkzeuges angeordnet sein, wobei in diesem Fall ein Aerosolstrahl 19' auf die Schmier- bzw. Kühlstelle gerichtet ist, wie in Fig. 1 oben schematisch angedeutet ist. Eine Außenschmierung findet insbesondere dann statt, wenn das Werkzeug zu klein zur Aufnahme von Aerosolkanälen ist.

Auf ein durch eine Steuerleitung 20 geleitetes Signal hin oder auch manuell, ist das Fluidschaltorgan von der Betriebsstellung 14 in die wenigstens eine weitere Schaltstellung, die Bypass-Stellung 15, überführbar.

In der Bypass-Stellung 15 wird das Aersol vom Aerosolerzeuger 3 zumindest teilweise, vorzugsweise jedoch zum überwiegenden Teil bzw. vollständig am Aerosolverbraucher 16, 17 vorbei über die Abzweigung 15' geleitet.

Wie in Fig. 1 gezeigt ist, kann die Abzweigung 15' mit einem Absaugsystem 22 oder einem anderen Auffangsystem für Schmiermittel der Werkzeugmaschine 2 verbunden sein und beispielsweise in einem Auffangbehälter 23 münden.

Zur Wiedergewinnung der Flüssigkeit aus dem Aerosol kann die Abzweigung 15' beispielsweise über den Auffangbehälter 23 mit dem Vorratsbehälter 5 verbunden sein, wobei Filter 24 zwischengeschaltet sein können. Wie in Fig. 1 gezeigt ist, kann neben der über eine Leitung 25 aus dem Druckbehälter 8 des Aerosolerzeugers 3 rückgewonnenen Flüssigkeit somit ein nahezu geschlossener Flüssigkeitskreislauf erzielt werden, der ein nur seltenes Wiederauffüllen des Vorratsbehälters notwendig macht.

In der Bypass-Stellung 15 bleiben das Fluidschaltorgan 13 und der Bereich vom Aerosolerzeuger 3 bis zum Fluidschaltorgan 13 vom Aerosol durchströmt; das Aerosol strömt durch die Abzweigung 15' ab. Durch diese Maßnahme steht an dem vorgelagerten, vom Aerosolerzeuger bevorzugt beabstandet angeordneten Fluidschaltorgan 13 das Aerosol stets in einer vom Schaltzustand des Fluidschaltorgans 13 unabhängigen Qualität bereit. Auf diese Weise kann die Reaktionszeit verkürzt werden, innerhalb der nach einem Umschalten des Fluidschaltorgans 13 von der Bypass-Stellung 15 in die Betriebsstellung 14 das Aerosol in der vom Aerosolverbraucher 16, 17 benötigten Qualität am Aerosolverbraucher 16, 17 anliegt.

Für besonders kurze Reaktionszeiten kann das Fluidschaltorgan 13 möglichst nahe an der Werkzeugmaschine 2, vorzugsweise an bzw. in der Werkzeugmaschine 2 selbst oder wenigstens im Bereich der Werkzeugmaschine 2 angeordnet sein.

Der in Strömungsrichtung S des Aerosols in der Betriebsstellung 14 hinter dem Fluidschaltorgan 13 liegende Bereich des Strömungsweges des Aerosols, der die Aerosolkanäle 18 sowie weitere Leitungsbereiche 26 innerhalb der Werkzeugmaschine 2 umfassen kann, kann beispielsweise eine Länge von höchstens zwei Meter aufweisen.

Die Länge der Strecke in Strömungsrichtung S des Aerosols vom Fluidschaltorgan 13 zum Aerosolverbraucher kann beispielsweise weniger als die Hälfte, insbesondere jedoch bevorzugt weniger als ¹/₅ der Länge des Strömungsweges des Aerosols vom Aerosolerzeuger 3, insbesondere der Injektorvorrichtung 7, zum Fluidschaltorgan 13 betragen. Durch diese Bemessungsrichtlinien kann selbst bei einem schnellen Werkzeugwechsel und bei schnellen Zerspanungsvorgängen eine gute Schmierwirkung am Aerosolverbraucher 16, 17 erzielt werden. Selbst bei sehr kurzen Zustellzeiten, innerhalb denen der Zerspanungsvorgang nach einem Werkzeugwechsel einsetzt, liegt so das Aerosol in Schmierqualität am Aerosolverbraucher an. Zudem kommt es während der Bypass-Stellung nicht zu einer Tröpfchenvergrößerung im Aerosol, so dass das Aerosol zuverlässig durch die rotierenden Aerosolkanäle 18 geleitet werden kann.

Eine weitere Maßnahme, um im Strömungsweg des Aerosols vom Aerosolerzeuger 3 bis zum Fluidschaltorgan 13 stets ein Aerosol mit optimalen Schmiereigenschaften beizubehalten, kann darin bestehen, dass der Strömungsquerschnitt der Aerosolleitung 11 in Strömungsrichtung S des Aerosols vor dem Fluidschaltorgan 13 größer ist als hinter dem Fluidschaltorgan 13. Der Strömungsquerschnitt der Aerosolleitung vor dem Fluidschaltorgan kann insbesondere mindestens das Doppelte, bevorzugt jedoch mindestens das Vierfache bzw. noch mehr bevorzugt das wenigstens 16-fache des Strömungsquerschnitts hinter dem Fluidschaltorgan betragen. Der Durchmesser der Aerosolleitung kann wenigstens etwa 5 mm, bevorzugt jedoch wenigstens etwa 10 mm betragen. Diese Maßnahmen führen im Bereich bis zum Fluidschaltorgan 13 zu einem geringen Strömungswiderstand der Aerosolleitung, so dass diese schnell mit dem Aerosol befüllbar ist. Dadurch kann bei einer Änderung der Aerosolzusammensetzung, beispielsweise seiner Fettigkeit, das veränderte Aerosol in der Bypass-Stellung 15 am Fluidschaltorgan 13 und in der Betriebsstellung 14 am Aerosolverbraucher 16, 17 schnell bereitgestellt werden.

Aus der Beschreibung des Ausführungsbeispiels der Fig. 1 wird deutlich, dass das Fluidschaltorgan 13 auch als Nachrüstsatz für einen bereits vorhandenen Aerosolerzeuger 3 oder als Bestandteil einer Werkzeugmaschine 2 bereitgestellt werden kann. Hierzu muss es lediglich in den Strömungsweg des Aerosols entweder an bzw. in die Werkzeugmaschine 2 oder in den Strömungsweg 11 eingebaut werden.

Im Folgenden wird kurz auf die Funktionsweise der Aerosolvorrichtung 1 eingegangen.

Bei der Bearbeitung des Werkstückes 17 werden von modemen Werkzeugmaschinen 2 beispielsweise in der Form von Bearbeitungszentren mehrere Bearbeitungsschritte hintereinander auf derselben Maschine ausgeführt. Hierzu weist die Werkzeugmaschine 2 ein Magazin M auf, das ein Vielzahl von Werkzeugen 16, 16a, 16b, 16c, ... aufweist, die nacheinander oder in beliebiger Reihenfolge zur Bearbeitung des Werkstückes 17 in eine Bearbeitungsposition bewegt werden können. In der Fig. 1 befindet sich beispielsweise das untere Werkzeug 16 in der Bearbeitungsposition. Der Werkzeugwechsel findet üblicherweise programmgesteuert durch eine Steuereinrichtung 27 der Werkzeugmaschine 2 statt. Bei der in Fig. 1 lediglich beispielhaft gezeigten Werkzeugmaschine 2 findet der Werkzeugwechsel durch ein einfaches Schwenken 28 des Werkzeugmagazins M statt, wodurch die übrigen Werkzeuge 16a, 16b, 16c nacheinander in die Bearbeitungsposition bewegt werden. Es ist natürlich nur erforderlich, dass das sich jeweils gerade in der Bearbeitungsposition befindliche Werkzeug 16 geschmiert wird; die übrigen Werkzeuge 16a, 16b, 16c können von der Aerosolversorgung getrennt werden. Hierzu kann in der Werkzeugmaschine 2 eine Verteilereinrichtung 29 vorgesehen sein, welche jeweils nur das sich in einer Bearbeitungsstellung befindliche Werkzeug 16 mit der Aerosolleitung 25 von der Aerosolvorrichtung 1 verbindet.

Während des Werkzeugwechsels, beispielsweise während das Magazin 26 vom Bohrer 16 mit großem Durchmesser zum Bohrer 16b mit kleinem Durchmesser schaltet, sollte vorzugsweise die Verbindung der Aerosolverbraucher mit der Aerosolvorrichtung unterbrochen werden, da in dieser Zeit keine Bearbeitung eines Werkstückes 17 stattfindet und eine Schmierung nicht notwendig ist. Dies kann unabhängig von der Aerosolvorrichtung 1 durch die Verteilereinrichtung 29 geschehen. Zusätzlich oder altemativ dazu kann von der Werkzeugmaschinensteuerung 27 über die Steuerleitung 20 ein Signal an das Fluidschaltorgan 13 ausgegeben werden, so dass die Umschaltung zwischen der Betriebsstellung 14 und der Bypass-Stellung 15 synchronisiert zum Werkzeugwechsel 28 stattfindet: Zu dem Zeitpunkt, zu dem der Werkzeugwechsel an der Werkzeugmaschine 2 beginnt, wird ein Steuersignal an das Fluidschaltorgan 13 ausgegeben, das zu einem Umschalten aus der bisher eingenommenen Betriebsstellung 14 in die Bypass-Stellung 15 führt. In diesem Schaltzustand wird das Aerosol vom Aerosolerzeuger 3 weiter in der erforderlichen Qualität produziert und lediglich über die Abzweigung 15' am Aerosolverbraucher 16 vorbei geleitet. Sobald das neue Werkzeug 16b in Position ist, wird von der Werkzeugmaschinensteuerung 27 ein weiteres Steuersignal an das Fluidschaltorgan 13 ausgegeben, so dass dieses von der Bypass-Stellung 15. in die Betriebsstellung 14 umschaltet und das Aerosol zum Aerosolverbraucher 16 geleitet wird. Da das Fluidschaltorgan 13 ständig von dem Aerosol in der gewünschten Zusammensetzung durchspült und das Fluidschaltorgan 13 möglichst nah am Aerosolverbraucher 16 angeordnet ist, steht nach nur kurzer Zeit, vorzugsweise innerhalb von einer Zeit von weniger als 0,5 bzw. 0,2 Sekunden das Aerosol in der gewünschten Qualität am Aerosolverbraucher 16 zur Verfügung, so dass der Zerspanvorgang mit dem neuen Werkzeug 16b ohne wesentliche Zeitverzögerung stattfinden kann.

Um niedrige Umschaltzeiten zu erzielen, kann das Fluidschaltorgan 13 als magnetbetätigtes Mehrwegeventil ausgestaltet sein.

Mit der Werkzeugmaschinensteuerung 27 synchronisiert kann auch das Absperrventil 12 der Aerosolvorrichtung 1 betätigt werden, um beispielsweise die Aerosolerzeugung bei einem Maschinenstillstand vollständig zu unterbrechen.

Optional kann die Aerosolvorrichtung 1 auch eine eigene Steuereinrichtung 30 aufweisen, welche mit der Werkzeugmaschinensteuerung 27 beispielsweise über standardisierte Busssysteme signalübertragend ausgestaltet ist und das Fluidschaltorgan 13 sowie weitere Komponenten wie das Absperrventil 12 der Aerosolvorrichtung 1 betätigt.

Die unterschiedlichen Größen der Aerosolkanäle in den Werkzeugen und der unterschiedliche Schmiermittelbedarf der Werkzeuge führen zu stark unterschiedlichen Strömungswiderständen im Strömungsweg des Aerosols und zu unterschiedlichen Anforderungen an die Zusammensetzung des Aerosols. Es kann daher von Vorteil sein, wenn das Fluidschaltorgan 13 die Strömungswiderstände derjenigen Aerosolverbraucher bereits berücksichtigen kann, die nach dem Umschalten von der Bypass-Stellung' 15 in die Betriebsstellung 14 am neuen Aerosolverbraucher anliegen. Durch diese Maßnahme wird eine sprunghafte Änderung des Strömungswiderstandes beim Übergang von der Bypass-Stellung 15 in die Betriebsstellung 14 verhindert, die zu einem Drucksprung im Bereich des Injektors 7 und damit zu einer plötzlichen Schwankung der Aerosolzusammensetzung bzw. einer Instabilität der Aerosolerzeugung führen kann.

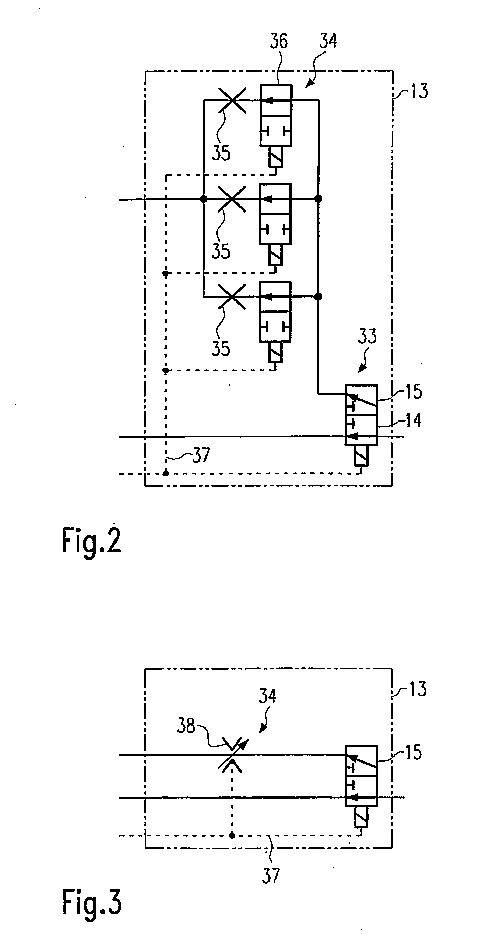

Die beiden Ausführungsformen der Fig. 2 und der Fig. 3 stellen solche Weiterbildungen des Fluidschaltorgans 13 dar, mit denen eine solche plötzliche Änderung des Strömungswiderstandes auf Seiten des Aerosolverbrauches berücksichtigt werden kann. Der Einfachheit halber ist in den Fig. 2 und 3 jeweils lediglich das Fluidschaltorgan 13 dargestellt. Der Aerosolerzeuger 3 und die Werkzeugmaschine 2 sind weggelassen, wobei jedoch die Fluidschaltorgane 13 der Fig. 2 und 3 jederzeit anstelle des Fluidschaltorgans 13 der Fig. 1 verwendet werden können.

Das Fluidschaltorgan 13 der Fig. 2 weist zusätzlich zu dem als beispielsweise Mehrwegventil ausgestalten Schaltelement 33, wie es im Ausführungsbeispiel der Fig. 1 gezeigt ist, ein Widerstandsorgan 34 mit einer Mehrzahl von parallel durchströmbar angeordneten Drosseln, beispielsweise Blenden 35 auf, denen jeweils ein von einer Offen- in eine Schließstellung überführbares Schaltelement, beispielsweise in From eines Ventils 36, zugeordnet ist. Das Ventil 36 kann vor oder nach der bzw. den zugeordneten Blenden 35 angeordnet sein.

Die Schaltelemente 36 werden über eine Steuerleitung 37 angesteuert und sind vorzugsweise unabhängig voneinander betätigbar.

Die Funktionsweise des Fluidschaltorgans der Fig. 2 unterscheidet sich von der Funktionsweise des Fluidschaltorgans 13 der Fig. 1 lediglich in der Bypass-Stellung 15, in der das Widerstandsorgan 34 vom Aerosol durchströmt ist: So richtet sich der Strömungswiderstand in der Bypass-Stellung 15 beim Fluidschaltorgan 13 der Fig. 2 danach, wie viel-bzw. bei-Blenden 35 mit unterschiedlichen Durchmessern, welche-Blenden gerade vom Aerosol durchströmt werden. Die vom Aerosol jeweils durchströmten Blenden werden durch den Öffnungszustand der Ventile 36 bestimmt.

Durch Ansteuerung der Ventile 36 beispielsweise mittels der in Fig. 1 gezeigten Steuereinrichtung 30 der Aerosolvorrichtung 1 kann somit ein veränderlicher Strömungswiderstand eingestellt werden, der an den Strömungswiderstand des Aerosolverbrauchers 16 angepasst ist.

Bei dem Ausführungsbeispiel der Fig. 2 entstehen beim Umschalten von der Bypass-Stellung 15 in die Betriebsstellung 14 keine Drucksprünge mehr, die zu einer Veränderung der Aerosolzusammensetzung führen können.

Beim Ausführungsbeispiel der Fig. 3 weist das Widerstandsorgan anstelle der Blendenanordnung eine Einrichtung 38 auf, die eine kontinuierliche Einstellung des Strömungswiderstandes in der Bypass-Stellung 15 ermöglicht. Eine solche Einrichtung 38 kann beispielsweise ein Proportionalventil oder eine veränderliche Blende sein. Im Übrigen ist die Funktionsweise des Ausführungsbeispiels der Fig. 3 gleich der Funktionsweise des Ausführungsbeispiels der Fig. 2. Gegenüber dem Ausführungsbeispiel der Fig. 2 bietet das Ausführungsbeispiel der Fig. 3 den Vorteil, dass der Strömungswiderstand an der Einrichtung 38 aufgrund der kontinuierlichen Veränderbarkeit genauer an den Strömungswiderstand des Aerosolverbrauchers 16 angepasst werden kann.

Ausgehend von den oben beschriebenen Ausführungsbeispielen sind verschiedene Varianten möglich. So kann das Fluidschaltorgan 13 in der Werkzeugmaschine 2 eingebaut sein. Anstelle der beispielhaft gezeigten Magnetventile können Schieber, Hähne, Blenden und dergleichen eingesetzt werden.

Ebenso können beliebige Aerosolerzeuger 3 verwendet werden, insbesondere auch Aerosolerzeuger, die keinen Druckbehälter 8 bzw. einen leitungsförmigen Druckbehälter aufweisen, der sich bis zum Fluidschaltorgan 13 erstreckt. Ebenso können mehrere Aerosolerzeuger 3 gleichzeitig in Reihe oder parallel geschaltet oder Kombinationen davon verwendet werden.

Die Abzweigung 15' kann unter Zwischenschaltung eines Druckreduziermittels auch direkt mit der Druckkammer 8 verbunden sein.

Schließlich kann anstelle eines Widerstandsorgans 34 mit veränderlichem Strömungswiderstand in einer vereinfachten Ausführung auch ein Widerstandsorgan 34 mit lediglich konstantem Strömungswiderstand, beispielsweise in Form einer Drossel, wie einer Blende oder Rohrleitung, vorgesehen sein.

Selbstverständlich ist die Aerosolvorrichtung 1 auch in anderen Bereichen einsetzbar, beispielsweise zur Schmierung von Lagern, die intermittierend betrieben werden.

## Patentansprüche

1. Aerosolvorrichtung (1), insbesondere zum Schmieren und/oder Kühlen von Aerosolverbrauchern (16, 17), wie Werkzeugen (16) und/oder Werkstücken (17), mit einem Aerosolerzeuger (3), durch den im Betrieb ein Aerosol aus einer Flüssigkeit und einem Trägergas erzeugbar ist, und mit einem im Strömungsweg (11) des Aerosols zu dem Aerosolverbraucher (16, 17) angeordneten Fluidschaltorgan (13), durch das in einer Betriebsstellung (14) der Aerosolerzeuger (3) mit dem Aerosolverbraucher (16, 17) aerosolleitend verbindbar ist, **dadurch gekennzeichnet, dass** das Fluidschaltorgan eine Abzweigung (15') vom Strömungsweg (11) umfasst und von der Betriebsstellung (14) in eine Bypass-Stellung (15) überführbar ausgestaltet ist, wobei in der Bypass-Stellung (15) der Aerosolerzeuger (3) mit der Abzweigung (15') aerosolleitend verbunden ist.

2. Aerosolvorrichtung (1) nach Anspruch 1, **dadurch gekennzeichnet, dass** in der Bypass-Stellung (15) das Aerosol durch die Abzweigung (15') im Wesentlichen am Aerosolverbraucher (16, 17) vorbei geleitet ist.

3. Aerosolvorrichtung (1) nach Anspruch 1 oder 2, **dadurch gekennzeichnet, dass** das Fluidschaltelement (13) in einer zum Aerosolverbraucher (16, 17) führenden Aerosolleitung (11) angeordnet ist.

4. Aerosolvorrichtung (1) nach einem der oben genannten Ansprüche, **dadurch gekennzeichnet, dass** die Länge des Strömungsweges (11) in Strömungsrichtung (S) des Aerosols vor dem Fluidschaltorgan (13) größer ist als der Strömungsweg hinter dem Fluidschaltorgan (13).

5. Aerosolvorrichtung (1) nach Anspruch 4, **dadurch gekennzeichnet, dass** das Verhältnis der Länge der Strömungswege (11) des Aerosols vor und hinter dem Fluidschaltorgan (13) wenigstens 2:1 beträgt.

6. Aerosolvorrichtung (1) nach Anspruch 5, **dadurch gekennzeichnet, dass** das Verhältnis der Länge der Strömungswege (11) des Aerosols vor und hinter dem Fluidschaltorgan (13) wenigstens 5:1 beträgt.

7. Aerosolvorrichtung (1) nach einem der oben genannten Ansprüche, **dadurch gekennzeichnet, dass** der Strömungsweg (11) des Aerosols in Strömungsrichtung (S) des Aerosols vom Fluidschaltorgan (13) zum Aerosolverbraucher (16, 17) höchstens etwa 2 Meter beträgt.

8. Aerosolvorrichtung (1) nach einem der oben genannten Ansprüche, **dadurch gekennzeichnet, dass** das Fluidschaltorgan (13) an oder im Bereich einer Werkzeugmaschine (2) angeordnet ist.

9. Aerosolvorrichtung (1) nach einem der oben genannten Ansprüche, **dadurch gekennzeichnet, dass** das Fluidschaltorgan (13) in eine Werkzeugmaschine (2) integriert ist.

10. Aerosolvorrichtung (1) nach einem der oben genannten Ansprüche, **dadurch gekennzeichnet, dass** die Aerosolleitung (11) im Bereich vor dem Fluidschaltorgan (13) einen größeren Strömungsquerschnitt aufweist als hinter dem Fluidschaltorgan.

11. Aerosolvorrichtung (1) nach Anspruch 10, **dadurch gekennzeichnet, dass** der Strömungsquerschnitt der Aerosolleitung (11) vor dem Fluidschaltorgan (13) mindestens etwa doppelt so groß ist wie der Strömungsquerschnitt hinter dem Fluidschaltorgan.

12. Aerosolvorrichtung (1) nach Anspruch 11, **dadurch gekennzeichnet, dass** der Strömungsquerschnitt der Aerosolleitung (11) vor dem Fluidschaltorgan (13) mindestens etwa viermal so groß ist wie der Strömungsquerschnitt hinter dem Fluidschaltorgan.

13. Aerosolvorrichtung (1) nach Anspruch 12, **dadurch gekennzeichnet, dass** der Strömungsquerschnitt der Aerosolleitung (11) vor dem Fluidschaltorgan (13) mindestens etwa 16-mal so groß ist wie der Strömungsquerschnitt hinter dem Fluidschaltorgan.

14. Aerosolvorrichtung (1) nach einem der oben genannten Ansprüche, **dadurch gekennzeichnet, dass** der Strömungsweg des Aerosols in Strömungsrichtung (S) des Aerosols vor dem Fluidschaltorgan (13) einen Durchmesser von wenigstens etwa 5 mm aufweist.

15. Aerosolvorrichtung (1) nach Anspruch 14, **dadurch gekennzeichnet, dass** der Strömungsweg in Strömungsrichtung (S) des Aerosols vor dem Fluidschaltorgan (13) einen Durchmesser von wenigstens etwa 10 mm aufweist.

16. Aerosolvorrichtung-(1) nach einem der oben genannten Ansprüche, **dadurch gekennzeichnet, dass** das Fluidschaltorgan (13) ein in der Bypass-Stellung (15) vom Aerosol durchströmtes Widerstandsorgan (34) umfasst, dessen Strömungswiderstand an den Strömungswiderstand des Aerosolverbrauchers (16, 17) angepasst ist.

17. Aerosolvorrichtung (1) nach einem der oben genannten Ansprüche, **dadurch gekennzeichnet, dass** das Fluidschaltorgan (13) ein in der Bypass-Stellung (15) vom Aerosol durchströmtes Widerstandsorgan (34) umfasst, dessen Strömungswiderstand an unterschiedliche Strömungswiderstände von unterschiedlichen Aerosolverbrauchern (16, 17) veränderlich anpassbar ist.

18. Aerosolvorrichtung (1) nach Anspruch 17, **dadurch gekennzeichnet, dass** das Widerstandsorgan (34) eine Mehrzahl von Drosseln (35) umfasst, die einzeln oder in Kombination schaltbar vom Aerosol durchströmbar ausgestaltet sind.

19. Aerosolvorrichtung (1) nach Anspruch 18, **dadurch gekennzeichnet, dass** jeder Drossel (35) ein Schaltmittel (36) zugeordnet ist, durch das die Drossel öffen- und schließbar ausgestaltet ist.

20. Aerosolvorrichtung (1) nach Anspruch 17, **dadurch gekennzeichnet, dass** das Widerstandsorgan (34) ein Element (38) mit veränderlichem Strömungsquerschnitt umfasst.

21. Aerosolvorrichtung (1) nach einem der oben genannten Ansprüche , **dadurch gekennzeichnet, dass** eine Steuereinrichtung (30) vorgesehen ist, die mit dem Fluidschaltorgan (13) und einer Werkzeugmaschine (2) signalübertragend verbindbar ausgestaltet ist.

22. Werkzeugmaschine (2) durch die ein Werkstück (17) mittels wenigstens eines Werkzeuges (16) im Wesentlichen spanabhebend bearbeitbar ist, **gekennzeichnet durch** eine Aerosolvorrichtung (1) nach einem der oben genannten Ansprüche.

23. Nachrüstsatz für eine Aerosolvorrichtung (1), durch die in einem Aerosolerzeuger (3) ein Aerosol aus einer Flüssigkeit und einem Trägergas erzeugbar ist, und die eine Aerosolleitung (11) aufweist, durch welche das Aerosol an einen Aerosolverbraucher (16, 17) leitbar ist, **gekennzeichnet durch** ein Fluidschaltorgan (13), das vom Aerosol durchströmbar in der Aerosolleitung (11) anbringbar und von einer Betriebsstellung (14), in der der Aerosolerzeuger (3) mit dem Aerosolverbraucher (16, 17) aerosolleitend verbindbar ist, in eine Bypass-Stellung (15) überführbar ausgestaltet ist, wobei in der Bypass-Stellung (15) das Aerosol im Wesentlichen am Aerosolverbraucher vorbei **durch** das Fluidschaltorgan (13) leitbar ist.

24. Nachrüstsatz für eine Werkzeugmaschine (2), durch die ein Werkstück im Wesentlichen spanabhebend bearbeitbar ist, und die mit Schmierstoffleitungen (18, 25) versehen ist, **gekennzeichnet durch** ein Fluidschaltorgan (13), das vom Aerosol durchströmbar in der Aerosolleitung (11) anbringbar und von einer Betriebsstellung (14), in der der Aerosolerzeuger (3) mit dem Aerosolverbraucher (16, 17) aerosolleitend verbindbar ist, in eine Bypass-Stellung (15) überführbar ausgestaltet ist, wobei in der Bypass-Stellung (15) das Aerosol im Wesentlichen am Aerosolverbraucher vorbei **durch** das Fluidschaltorgan (13) leitbar ist.

25. Verfahren, insbesondere zum Schmieren und/oder Kühlen von Aerosolverbrauchern (16, 17) wie Werkzeugen (16) und/oder Werkstücken (17), bei dem ein Aerosol aus einer Flüssigkeit und einem Trägergas erzeugt und über ein Fluidschaltorgan (13) zu dem Aerosolverbraucher (16, 17) geleitet wird, **dadurch gekennzeichnet, dass** bei einem Wechsel (28) des Aerosolverbrauchers (16, 17) das Aerosol im Fluidschaltorgan (13) im Wesentlichen am Aerosolverbraucher vorbei geleitet wird.

26. Verfahren nach Anspruch 25, **dadurch gekennzeichnet, dass** das Aerosol während der Umleitung durch das Fluidschaltorgan (13) weiter strömt.

27. Verfahren nach Anspruch 25 oder 26, **dadurch gekennzeichnet, dass** der Strömungswiderstand des Fluidschaltorgans (13) in Abhängigkeit vom Strömungswiderstand des Aerosolverbrauchers (16, 1.7) verändert wird.

28. Verfahren nach einem der Ansprüche 25 bis 27, **dadurch gekennzeichnet, dass** die Umleitung auf ein Signal einer Werkzeugmaschine hin vom Fluidschaltorgan (13) vorgenommen wird.

## Claims

1. An aerosol apparatus (1), in particular for lubricating and/or cooling aerosol-users (16, 17) such as tools (16) and/or workpieces (17), with an aerosol generator (3) by which in operation an aerosol is capable of being generated from a liquid and a carrier gas, and with a fluid-switching element (13) arranged in the flow path (11) of the aerosol to the aerosol-user (16, 17), by which fluid-switching element in an operating position (14) the aerosol generator (3) is capable of being connected to the aerosol-user (16, 17) in aerosol-conducting manner, **characterised in that** the fluid-switching element includes a branching (15') from the flow path (11) and is designed to be capable of being transferred from the operating position (14) into a bypass position (15), the aerosol generator (3) being connected in the bypass position (15) to the branching (15') in aerosol-conducting manner.

2. Aerosol apparatus (1) according to Claim 1, **characterised in that** in the bypass position (15) the aerosol is conducted through the branching (15') substantially past the aerosol-user (16, 17).

3. Aerosol apparatus (1) according to Claim 1 or 2, **characterised in that** the fluid-switching element (13) is arranged in an aerosol line (11) leading to the aerosol-user (16, 17).

4. Aerosol apparatus (1) according to one of the above claims, **characterised in that** the length of the flow path (11) in the direction of flow (S) of the aerosol upstream of the fluid-switching element (13) is greater than the flow path downstream of the fluid-switching element (13) .

5. Aerosol apparatus (1) according to Claim 4, **characterised in that** the ratio of the lengths of the flow paths (11) of the aerosol upstream and downstream of the fluid-switching element (13) amounts to at least 2:1.

6. Aerosol apparatus (1) according to Claim 5, **characterised in that** the ratio of the lengths of the flow paths (11) of the aerosol upstream and downstream of the fluid-switching element (13) amounts to at least 5:1.

7. Aerosol apparatus (1) according to one of the above claims, **characterised in that** the flow path (11) of the aerosol in the direction of flow (S) of the aerosol from the fluid-switching element (13) to the aerosol-user (16, 17) amounts to at most about 2 metres.

8. Aerosol apparatus (1) according to one of the above claims, **characterised in that** the fluid-switching element (13) is arranged on or in the region of a machine tool (2).

9. Aerosol apparatus (1) according to one of the above claims, **characterised in that** the fluid-switching element (13) is integrated into a machine tool (2).

10. Aerosol apparatus (1) according to one of the above claims, **characterised in that** the aerosol line (11) exhibits a larger flow cross-section in the region upstream of the fluid-switching element (13) than downstream of the fluid-switching element.

11. Aerosol apparatus (1) according to Claim 10, **characterised in that** the flow cross-section of the aerosol line (11) upstream of the fluid-switching element (13) is at least about twice as large as the flow cross-section downstream of the fluid-switching element.

12. Aerosol apparatus (1) according to Claim 11, **characterised in that** the flow cross-section of the aerosol line (11) upstream of the fluid-switching element (13) is at least about four times as large as the flow cross-section downstream of the fluid-switching element.

13. Aerosol apparatus (1) according to Claim 12, **characterised in that** the flow cross-section of the aerosol line (11) upstream of the fluid-switching element (13) is at least about 16 times as large as the flow cross-section downstream of the fluid-switching element.

14. Aerosol apparatus (1) according to one of the above claims, **characterised in that** the flow path of the aerosol in the direction of flow (S) of the aerosol upstream of the fluid-switching element (13) exhibits a diameter of at least about 5 mm.

15. Aerosol apparatus (1) according to Claim 14, **characterised in that** the flow path in the direction of flow (S) of the aerosol upstream of the fluid-switching element (13) exhibits a diameter of at least about 10 mm.

16. Aerosol apparatus (1) according to one of the above claims, **characterised in that** the fluid-switching element (13) includes a resistance element (34) which in the bypass position (15) is flowed through by the aerosol, the flow resistance of said resistance element being adapted to the flow resistance of the aerosol-user (16, 17).

17. Aerosol apparatus (1) according to one of the above claims, **characterised in that** the fluid-switching element (13) includes a resistance element (34) which in the bypass position (15) is flowed through by the aerosol, the flow resistance of said resistance element being capable of being variably adapted to varying flow resistances of varying aerosol-users (16, 17).

18. Aerosol apparatus (1) according to Claim 17, **characterised in that** the resistance element (34) includes a plurality of throttles (35) which are designed to be capable of being flowed through by the aerosol individually or in combination in switchable manner.

19. Aerosol apparatus (1) according to Claim 18, **characterised in that** to each throttle (35) there is assigned a switching means (36) by which the throttle is designed to be capable of being opened and closed.

20. Aerosol apparatus (1) according to Claim 17, **characterised in that** the resistance element (34) includes an element (38) with variable flow cross-section.

21. Aerosol apparatus (1) according to one of the above claims, **characterised in that** a control device (30) is provided which is designed to be capable of being connected to the fluid-switching element (13) and to a machine tool (2) in signal-transmitting manner.

22. A machine tool (2) by which a workpiece (17) is capable of being substantially machined by means of at least one tool (16), **characterised by** an aerosol apparatus (1) according to one of the above claims.

23. A retrofit kit for an aerosol apparatus (1) by which in an aerosol generator (3) an aerosol is capable of being generated from a liquid and a carrier gas and which exhibits an aerosol line (11) through which the aerosol is capable of being conducted to an aerosol-user (16, 17), **characterised by** a fluid-switching element (13) which is capable of being fitted in the aerosol line (11) so as to be capable of being flowed through by the aerosol and is designed to be capable of being transferred from an operating position (14), in which the aerosol generator (3) is capable of being connected to the aerosol-user (16, 17) in aerosol-conducting manner, into a bypass position (15), the aerosol being capable in the bypass position (15) of being conducted substantially past the aerosol-user by the fluid-switching element (13).

24. A retrofit kit for a machine tool (2) by which a workpiece is substantially capable of being machined and which is provided with lubricant lines (18, 25),
**characterised by** a fluid-switching element (13) which is capable of being fitted in the aerosol line (11) so as to be capable of being flowed through by the aerosol and is designed to be capable of being transferred from an operating position (14), in which the aerosol generator (3) is capable of being connected to the aerosol-user (16, 17) in aerosol-conducting manner, into a bypass position (15), the aerosol being capable in the bypass position (15) of being conducted substantially past the aerosol-user by the fluid-switching element (13).

25. A process, in particular for lubricating and/or cooling aerosol-users (16, 17) such as tools (16) and/or workpieces (17), wherein an aerosol is generated from a liquid and a carrier gas and is conducted to the aerosol-user (16, 17) via a fluid-switching element (13), **characterised in that** in the event of an exchange (28) of the aerosol-user (16, 17) the aerosol is conducted substantially past the aerosol-user in the fluid-switching element (13).

26. Process according to Claim 25, **characterised in that** the aerosol continues to flow through the fluid-switching element (13) during the rerouting.

27. Process according to Claim 25 or 26, **characterised in that** the flow resistance of the fluid-switching element (13) is changed as a function of the flow resistance of the aerosol-user (16, 17).

28. Process according to one of Claims 25 to 27, **characterised in that** the rerouting is performed by the fluid-switching element (13) in response to a signal of a machine tool.

## Revendications

1. Dispositif à aérosol (1), en particulier pour la lubrification et/ou le refroidissement de consommateurs d'aérosols (16, 17), comme des outils (16) et/ou des pièces (17), avec un générateur d'aérosol (3), grâce auquel un aérosol peut être généré à partir d'un liquide et d'un gaz porteur en fonctionnement, et avec un organe de commutation fluidique (13) disposé sur le chemin d'écoulement (11) de l'aérosol vers le consommateur d'aérosol (16, 17), organe par lequel, dans une position de fonctionnement (14), le générateur d'aérosol (3) peut être relié au consommateur d'aérosol (16, 17) de manière à conduire l'aérosol, **caractérisé en ce que** l'organe de commutation fluidique comprend une dérivation (15') du chemin d'écoulement (11) et peut être conçu de manière à pouvoir passer de la position de fonctionnement (14) à une position de dérivation (15), le générateur d'aérosol (3) étant relié de manière à conduire l'aérosol à la dérivation (15') dans la position de dérivation (15).

2. Dispositif à aérosol (1) selon la revendication 1, **caractérisé en ce que** dans la position de dérivation (15), l'aérosol passe sensiblement à côté du générateur (16, 17) à travers la dérivation (15').

3. Dispositif à aérosol (1) selon la revendication 1 ou 2, **caractérisé en ce que** l'élément de commutation fluidique (13) est disposé dans une conduite à aérosol (11) menant au consommateur d'aérosol (16, 17).

4. Dispositif à aérosol (1) selon l'une quelconque des revendications précédentes, **caractérisé en ce que** la longueur du chemin d'écoulement (11) dans le sens d'écoulement (S) de l'aérosol en amont de l'organe de commutation fluidique (13) est plus long que le chemin d'écoulement en aval de l'organe de commutation fluidique (13).

5. Dispositif à aérosol (1) selon la revendication 4, **caractérisé en ce que** le rapport de la longueur des chemins d'écoulement (11) de l'aérosol en amont et en aval de l'organe de commutation fluidique (13) est d'au moins 2:1.

6. Dispositif à aérosol (1) selon la revendication 5, **caractérisé en que** le rapport de la longueur des chemins d'écoulement (11) de l'aérosol en amont et en aval de l'organe de commutation fluidique (13) est d'au moins 5:1.

7. Dispositif à aérosol (1) selon l'une quelconque des revendications précédentes, **caractérisé en ce que** le chemin d'écoulement (11) de l'aérosol dans le sens d'écoulement (S) de l'aérosol entre l'organe de commutation fluidique (13) et le consommateur d'aérosol (16, 17) est au maximum d'environ 2 mètres.

8. Dispositif à aérosol (1) selon l'une quelconque des revendications précédentes, **caractérisé en ce que** l'organe de commutation fluidique (13) est disposé sur une machine-outil (2) ou à proximité.

9. Dispositif à aérosol (1) selon l'une quelconque des revendications précédentes, **caractérisé en ce que** l'organe de commutation fluidique (13) est intégré dans une machine-outil (2).

10. Dispositif à aérosol (1) selon l'une quelconque des revendications précédentes, **caractérisé en ce que** la conduite d'aérosol (11) présente dans la zone en amont de l'organe de commutation fluidique (13) une section d'écoulement plus grande qu'en aval de l'organe de commutation fluidique.

11. Dispositif à aérosol (1) selon la revendication 10, **caractérisé en ce que** la section d'écoulement de la conduite d'aérosol (11) en amont de l'organe de commutation fluidique (13) est au moins environ deux fois plus grande que la section d'écoulement en aval de l'organe de commutation fluidique.

12. Dispositif à aérosol (1) selon la revendication 11, **caractérisé en ce que** la section d'écoulement de la conduite d'aérosol (11) en amont de l'organe de commutation fluidique (13) est au moins environ quatre fois plus grande que la section d'écoulement en aval de l'organe de commutation fluidique.

13. Dispositif à aérosol (1) selon la revendication 12, **caractérisé en ce que** la section d'écoulement de la conduite d'aérosol (11) en amont de l'organe de commutation fluidique (13) est au moins environ 16 fois plus grande que la section d'écoulement en aval de l'organe de commutation fluidique.

14. Dispositif à aérosol (1) selon l'une quelconque des revendications précédentes, **caractérisé en ce que** le chemin d'écoulement de l'aérosol dans le sens d'écoulement (S) de l'aérosol en amont de l'organe de commutation fluidique (13) présente un diamètre d'au moins 5 mm environ.

15. Dispositif à aérosol (1) selon la revendication 14, **caractérisé en ce que** le chemin d'écoulement dans le sens d'écoulement (S) de l'aérosol en amont de l'organe de commutation fluidique (13) présente un diamètre d'au moins 10 mm environ.

16. Dispositif à aérosol (1) selon l'une quelconque des revendications précédentes, **caractérisé en ce que** l'organe de commutation fluidique (13) comprend un organe de résistance (34) traversé par l'aérosol dans la position de dérivation (15), dont la résistance à l'écoulement est adaptée à la résistance d'écoulement du consommateur d'aérosol (16, 17) .

17. Dispositif à aérosol (1) selon l'une quelconque des revendications précédentes, **caractérisé en ce que** l'organe de commutation fluidique (13) comprend un organe de résistance (34) traversé par l'aérosol dans la position de dérivation (15), dont la résistance à l'écoulement peut être adaptée de façon variable à différentes résistances à l'écoulement de différents consommateurs d'aérosols (16, 17).

18. Dispositif à aérosol (1) selon la revendication 17, **caractérisé en ce que** l'organe de résistance (34) comprend une multitude de restricteurs (35), qui sont conçus de manière à pouvoir être activés séparément ou en combinaison et de manière à pouvoir être traversés par l'aérosol.

19. Dispositif à aérosol (1) selon la revendication 18, **caractérisé en ce qu'**à chaque restricteur (35) est associé un moyen de commutation (36), qui permet d'ouvrir et de fermer le restricteur.

20. Dispositif à aérosol (1) selon la revendication 17, **caractérisé en ce que** l'organe de résistance (34) comprend un élément (38) avec une section d'écoulement variable.

21. Dispositif à aérosol (1) selon l'une quelconque des revendications précédentes, **caractérisé en ce qu'**un dispositif de commande (30) est prévu, lequel est conçu de manière à pouvoir être relié à l'organe de commutation fluidique (13) et à une machine-outil (2) en transmettant des signaux.

22. Machine-outil (2), grâce à laquelle une pièce (17) peut être usinée essentiellement par enlèvement de copeaux au moyen d'au moins un outil (16), **caractérisée par** un dispositif à aérosol (1) selon l'une quelconque des revendications précédentes.

23. Jeu de complément pour un dispositif à aérosol (1), grâce auquel un aérosol peut être généré à partir d'un liquide et d'un gaz porteur dans un générateur d'aérosol (3) et lequel présente une conduite d'aérosol (11), par laquelle l'aérosol peut être conduit à un consommateur d'aérosol (16, 17), **caractérisé par** un organe de commutation fluidique (13), qui peut être installé dans la conduite d'aérosol (11) de manière à pouvoir être traversé par l'aérosol et qui est conçu de manière à pouvoir passer d'une position de fonctionnement (14), dans laquelle le générateur d'aérosol (3) peut être relié au consommateur d'aérosol (16, 17) de manière à conduire l'aérosol, à une position de dérivation (15), l'aérosol pouvant dans la position de dérivation (15) passer sensiblement à côté du consommateur d'aérosol grâce à l'organe de commutation fluidique (13).

24. Jeu de complément pour une machine-outil (2), grâce à laquelle une pièce peut être usinée sensiblement par enlèvement de copeaux, et qui est dotée de conduites de lubrification (18, 25),
**caractérisé par** un organe de commutation fluidique (13) qui peut être installé dans la conduite d'aérosol (11) de manière à pouvoir être traversé par l'aérosol et qui est conçu de manière à pouvoir passer d'une position de fonctionnement (14), dans laquelle le générateur d'aérosol (3) peut être relié au consommateur d'aérosol (16, 17) de manière à conduire l'aérosol, à une position de dérivation (15), l'aérosol pouvant dans la position de dérivation (15) passer sensiblement à côté du consommateur d'aérosol grâce à l'organe de commutation fluidique (13).

25. Procédé, en particulier pour la lubrification et/ou le refroidissement de consommateurs d'aérosols (16, 17) comme des outils (16) et/ou des pièces (17), dans lequel un aérosol est généré à partir d'un liquide et d'un gaz porteur et est conduit vers le consommateur d'aérosol (16, 17) par un organe de commutation fluidique (13), **caractérisé en ce que** dans le cas d'un changement (28) du consommateur d'aérosol (16, 17), l'aérosol est conduit dans l'organe de commutation fluidique sensiblement à côté du consommateur d'aérosol.

26. Procédé selon la revendication 25, **caractérisé en ce que** l'aérosol continue à s'écouler pendant la dérivation à travers l'organe de commutation fluidique (13).

27. Procédé selon la revendication 25 ou 26, **caractérisé en ce que** la résistance d'écoulement de l'organe de commutation fluidique (13) change en fonction de la résistance d'écoulement du consommateur d'aérosol (16, 17).

28. Procédé selon l'une quelconque des revendications 25 à 27, **caractérisé en ce que** la dérivation est effectuée par l'organe de commutation fluidique (13) au signal d'une machine-outil.
